# EUROPÄISCHE PATENTSCHRIFT

(11) **EP 2 759 826 B1**
(45) Veröffentlichungstag und Bekanntmachung des Hinweises auf die Patenterteilung: **14.06.2017**
(21) Anmeldenummer: 13153106.3
(22) Anmeldetag: 29.01.2013
(51) Int. Cl.: G01N 17/00

(54) **Verfahren zur Überprüfung von Klimatisierungsbedingungen in einer Klimakammer**
Method for testing the climatic conditions in an environmental chamber
Procédé pour tester des conditions climatiques dans une enceinte climatique

(43) Veröffentlichungstag der Anmeldung: 30.07.2014
(73) Patentinhaber: Weiss Umwelttechnik GmbH, 35447 Reiskirchen-Lindenstruth (DE)
(72) Erfinder: Schlosser, Volker, 35305 Grünberg (DE)
(74) Vertreter: Schultheiss & Sterzel Patentanwälte PartG mbB

(56) Entgegenhaltungen:
- DE-C1- 4 139 107
- JP-A- S57 144 451
- US-A1- 2004 044 483
- US-A1- 2012 072 171
- "Verformungsmessungen in der Klimakammer", , 2011, XP55066541, D-38114 Braunschweig Gefunden im Internet: URL:http://www.aicon3d.de/fileadmin/user_u pload/praxisberichte/de/pdf/Applikation_DP A_Klimakammer_de_03_2011.pdf [gefunden am 2013-06-13]
- "Veränderungen fest im Blick", QZ, 2008, XP55066542, München Gefunden im Internet: URL:http://www.aicon3d.de/fileadmin/user_u pload/produkte/de/moveinspect/moveinspect_ HF/pdf/Fachartikel_MoveInspect_QZ_8-2008.p df [gefunden am 2013-06-13]
- "Richtlinie DAkkS-DKD-R 5-7 Kalibrierung von Klimaschränken", , 2010, XP55066585, 38116 Braunschweig Gefunden im Internet: URL:http://www.dakks.de/sites/default/file s/DAkkS-DKD-R 5-7_20100614_v1.0_0.pdf [gefunden am 2013-06-13]

## Beschreibung

Die Erfindung betrifft ein Verfahren zur Überprüfung von Klimatisierungsbedingungen in einer Klimakammer. Ferner beschreibt die vorliegende Erfindung ein Verfahren zur Bestimmung der Auswirkungen von klimatischen Bedingungen auf einen Testkörper in einer Klimakammer. Die Erfindung betrifft auch eine Vorrichtung zum Durchführen solcher Verfahren.

Bei der Temperatur- und Klimaprüfung werden verschließbare Räume eingesetzt, in denen die Temperatur und andere Umgebungsparameter einstellbar sind, um bestimmte klimatische und andere Umgebungsbedingungen simulieren zu können. Diese Klimakammern werden vielfach auf spezifische Anforderungen der Anwender angepasst und können daher nicht in Großserien gefertigt werden. Hierdurch ergeben sich jedoch Probleme hinsichtlich der Zuverlässigkeit der Klimatisierungsbedingungen, die im Allgemeinen erst durch Versuche festgestellt werden, die während der Inbetriebnahme durchgeführt werden. Hierbei treten viele der von den gewünschten Klimatisierungsbedingungen feststellbaren Abweichungen nicht schlagartig auf, sondern nehmen über die Zeit zu, so dass die Aussagekraft der durch die Klimatisierungsuntersuchungen gewonnenen Daten einer gewissen Unsicherheit unterliegt. Weiterhin ist zu berücksichtigen, dass Klimakammern durchaus ein großes Volumen aufweisen können, so werden beispielsweise Fahrzeuge, einschließlich Lastkraftwagen umfangreichen Klimatisierungsversuchen unterworfen. Aufgrund dieses Volumens können jedoch leicht Probleme hinsichtlich der Homogenität der Klimatisierungsbedingungen auftreten, die mit herkömmlichen Verfahren nur schwer feststellbar sind.

Gemäß dem bisherigen Stand der Technik werden die Klimatisierungsbedingungen durch Testversuchsreihen überprüft, wobei die Betriebszustände der zur Klimatisierung verwendeten Aggregate, wie beispielsweise Ölstände in Kompressoren, Vereisung von Kompressoren usw. sowie die Betauung von Prüflingen sporadisch visuell vom Inbetrieb- oder Abnahmepersonal überprüft werden. Dies wird in aller Regel nicht in festen Zyklen oder zu festgelegten Zeitpunkten gemacht, so dass das Feststellen von Problemen von der Erfahrung des Technikers und/oder vom Zufall abhängig ist.

Ein weiteres Problem stellt die Bestimmung der Auswirkungen von klimatischen Bedingungen auf einen Testkörper in einer Klimakammer dar. Im Allgemeinen können zu unterschiedlichen Zeitpunkten Fotos der Testkörper angefertigt werden, deren Auswertung jedoch aufwendig und fehleranfällig ist.

Ein System, welches die mit dieser Auswertung verbundenen Probleme beschreibt und eine Lösung bereitstellt, wird in der Druckschrift US 2012/072171 A1 beschrieben. Hierbei werden Bilder zur Auswertung der durch eine Klimatisierung hervorgerufenen Veränderungen eines Prüfkörpers mit einem Kamerasystem aufgezeichnet, wobei die durch die Klimatisierung hervorgerufenen Dimensionsänderungen der Prüfkörper bestimmt und in einem Speicher abgelegt werden. Die aufgenommenen Bilddaten werden jedoch nicht zwingend in einem Speicher abgelegt. Weiterhin werden gemäß dieser Druckschrift Sensordaten, wie beispielsweise Temperaturen und/oder Luftfeuchtigkeitswerte mit einer festgestellten Abweichung korreliert. Nachteilig ist hieran, dass die zeitlichen Veränderungen der Prüfkörper nicht ausreichend überprüft werden können. Weiterhin kann die Dynamik einer Änderung nicht beobachtet werden, so dass die zeitliche Veränderung des Prüfkörpers bei konstanten Messbedingungen hinsichtlich Luftfeuchtigkeit und Temperatur durch das in US 2012/072171 A1 beschriebene System nur unzureichend beobachtet werden kann.

Weitere Verfahren zur Beobachtung von Verformungen bei Temperaturänderungen werden in den Druckschriften US 6,564,166 B1 und US 5,601,364 A beschrieben.

Aufgabe der Erfindung ist es daher ein Verfahren bereitzustellen, mit dem es gelingt die Klimatisierungsbedingungen in einer Klimakammer sehr einfach und kostengünstig zu überprüfen. Hierbei soll eine automatisierbare Dokumentation dieser Bedingungen sichergestellt werden können.

Weiterhin sollen Fehler an Aggregaten, die im Zusammenhang mit dem Betrieb der Klimakammer eingesetzt werden, möglichst frühzeitig erkannt werden, so dass eine Behebung dieser Fehler sehr zügig möglich ist.

Eine weitere Aufgabe der vorliegenden Erfindung besteht darin, ein Verfahren zur Verfügung zu stellen, welches eine Auswertung von Veränderungen an Testkörpern über einen Zeitverlauf ermöglicht.

Weitere nicht explizit genannte Aufgaben ergeben sich aus dem Gesamtzusammenhang der nachfolgenden Beschreibung, Beispiele und Ansprüche.

Die der vorliegenden Erfindung zugrundeliegenden Aufgaben werden dementsprechend gelöst durch die in Anspruch 1 dargestellten Verfahren. Bevorzugte Ausführungsformen werden in den Unteransprüchen unter Schutz gestellt.

Gegenstand der vorliegenden Erfindung ist demgemäß ein Verfahren zur Dokumentation und Überprüfung von Klimatisierungsbedingungen in einer Klimakammer, welches dadurch gekennzeichnet ist, dass mit wenigstens einem Sensor in der Klimakammer aufgenommene Messwerte mit Zeitwerten korreliert werden und mit Zeitwerten korrelierte Bilddaten erfasst werden, wobei die Zeitwerte der Messwerte und der Bilddaten miteinander synchronisiert werden und in einem Speicher abrufbar hinterlegt werden und die mit Zeitwerten korrelierten Bilddaten mit Sollbilddaten verglichen werden und die Klimatisierungsbedingungen in der Klimakammer überprüft und dokumentiert werden.

Die erfindungsgemäßen Verfahren sind einfach umsetzbar und daher kostengünstig in der Realisierung. Hierbei kann überraschend eine im Wesentlichen vollständige Dokumentation von Versuchsabläufen bereitgestellt werden, durch die eventuell auftretende Fehler sicher und einfach gefunden werden können.

Ferner ermöglicht die vorliegende Erfindung eine einfache Auswertung der zeitlichen Veränderungen eines Testkörpers bei konstanten Klimatisierungsbedingungen. So kann die Isolation von Testkörpern bei konstanten Feuchtigkeits- und Temperaturbedingungen einfach und zuverlässig überprüft werden.

Darüber hinaus gelingt es durch die erfindungsgemäßen Verfahren, die Zuverlässigkeit der Versuchsdaten und die Genauigkeit derselben aufgrund einer höheren Präzision der Klimabedingungen in der Klimakammer zu verbessern.

Das vorliegende Verfahren kann unter anderem zur Überprüfung von Klimatisierungsbedingungen in einer Klimakammer dienen. Unter einer Klimakammer ist ein abschließbarer oder ein verschlossener Raum zu verstehen, in welchem Temperaturwerte und/oder Feuchtigkeitswerte einstellbar sind.

Vorzugsweise kann vorgesehen sein, dass zur Überprüfung von Klimatisierungsbedingungen vorgegebene Feuchtigkeitswerte und/oder Temperaturwerte eingestellt werden. Ferner können die mit wenigstens einem Sensor in der Klimakammer aufgenommenen Messwerte mit Sollwerten verglichen werden, die sich aus den vorgegebenen Feuchtigkeitswerten und/oder Temperaturwerten ergeben. Durch diese Ausgestaltung können Abweichungen der berechneten Eigenschaften der Klimakammer von den tatsächlich erreichten Werten bestimmt werden.

Die Klimakammer kann ein Volumen einnehmen, das an die zu untersuchenden Gegenstände angepasst ist. So können Klimakammern zur Untersuchung von Kleingeräten beispielsweise ein Volumen von unter 200 dm³ aufweisen. Vorzugsweise werden die vorliegenden Verfahren jedoch mit Klimakammern durchgeführt, die individuell anpassbar sind. Diese Klimakammern weisen vorzugsweise ein Volumen von mindestens 200 dm³, besonders bevorzugt mindestens 1 m³, speziell bevorzugt mindestens 5 m³ auf. In diesen Klimakammern können beispielsweise Fahrzeuge einer Temperatur- und Klimaprüfung unterzogen werden.

Unter einer Überprüfung von Klimatisierungsbedingungen wird hierin ein Vorgang verstanden, bei dem die von mindestens einem Sensor gemessenen Daten, die sich auf Temperatur- und/oder Feuchtigkeitswerte beziehen, durch eine weitere Messung kontrolliert werden. Eine Überprüfung kann als Vergleich von gemessenen Daten mit Sollwerten angesehen werden.

Zur Durchführung der vorliegenden Erfindung werden in der Klimakammer aufgenommene Messwerte mit Zeitwerten korreliert. Zur Aufnahme der Messwerte werden insbesondere Sensoren eingesetzt, die sich in der Klimakammer befinden. Hierbei können die Sensoren unter anderem Temperaturdaten und/oder Feuchtigkeitsdaten bestimmen. Die Art der Sensoren, insbesondere deren Messbereich, Empfindlichkeit und Messgenauigkeit ist vom Einsatzzweck der Klimakammer abhängig. Temperatursensor können beispielsweise Temperaturen im Bereich von -80°C bis 200°C, vorzugsweise -70°C bis 170 °C messen, wobei diese Temperaturen mit einer Abweichung von höchstens ± 10°C, besonders bevorzugt höchstens ± 5°C bestimmt werden können. Ein bevorzugter Feuchtigkeitssensor kann einen Feuchtigkeitsbereich von 0 bis 100% relativer Luftfeuchtigkeit bestimmen, wobei die Messgenauigkeit den Anforderungen angepasst werden kann. Die Messempfindlichkeit bevorzugter Feuchtigkeitssensoren in Bezug auf die absoluten Feuchtigkeitswerte ergibt sich aus dem vorgesehenen Temperaturmessbereich der Klimakammer und dem vorgesehenen Bereich der relativen Luftfeuchtigkeit. Gegebenenfalls kann die Klimakammer mehrere Feuchtigkeits- und/oder Temperatursensoren umfassen, um bestimmte Messbereiche mit hoher Genauigkeit zuverlässig abzudecken.

Die gemessenen Daten werden mit jeweils einem Zeitwert korreliert und in einem Speicher abrufbar hinterlegt. Demgemäß wird mindestens ein Zeitsignalgeber eingesetzt, welcher aus dem Stand der Technik weithin bekannt ist. Hierzu können beispielsweise Uhren, insbesondere Quarzuhren verwendet werden. Weiterhin können Zeitsignale aus externen Quellen, die beispielsweise über das Internet abgerufen werden können, verwendet werden.

Vorzugsweise können 10 Messwerten pro Sekunde bis 6 Messwerte pro Stunde der mit einem Sensor gemessenen Daten abgespeichert werden, besonders bevorzugt 1 Messwert pro Sekunde bis 2 Messwerte pro Minute.

Als Speicher können allgemein bekannte Medien eingesetzt werden, die vorzugsweise eine dauerhafte Aufbewahrung der Daten ermöglichen. Gemäß einer bevorzugten Ausführungsform können Zwischenspeicher eingesetzt werden, deren Speicherinhalt auf einen dauerhaften Speicher übertragen wird. Zu den dauerhaften Datenspeichern zählen beispielsweise elektronische Speichermedien, wie Speicherkarten, USB-Sticks und Solid-State-Drives (SSD), optische Speichermedien, wie CD-, DVD-Medien, und magnetische Speichermedien, wie Festplattenlaufwerke und Magnetbänder.

Neben den zuvor dargelegten Sensordaten werden zusätzlich mit Zeitwerten korrelierte Bilddaten erfasst. Diese Bilddaten unterscheiden sich demgemäß von den zuvor beschriebenen Sensordaten. Die Bilddaten werden im Allgemeinen durch Kameras erzeugt, wobei diese Kameras im visuell sichtbaren Bereich des Lichts arbeiten können. Weiterhin können auch Kameras eingesetzt werden, die im IR- und/oder im UV- Bereich des Lichtspektrums empfindlich sind.

Gemäß einer bevorzugten Ausführungsform können die in den Bilddaten enthaltenen Informationen Farbwerte, Kontrastwerte und/oder Temperaturwerte enthalten. Durch diese Ausgestaltung kann eine Änderung der Farbe und/oder Temperatur eines Gegenstandes überprüft werden, so dass bei einem unzulässigen Farb- und/oder Temperaturwert ein Kontroll- oder Warnsignal erzeugt werden kann. Durch diese Maßnahme können Fehler besonders frühzeitig erkannt und behoben werden.

Das Kontroll- oder Warnsignal kann hierbei durch Datenverbindungen an beliebige Empfänger übermittelt werden, wobei eine Benachrichtigung per E-Mail an Computer oder per SMS an tragbare Telefone erfolgen kann. Weiterhin kann ein akustisches oder optisches Signal im Bereich der Klimakammerüberwachung erzeugt werden. Ferner können die genannten Signale in einem Speicher abgelegt und, vorzugsweise mit Zeitwerten versehen, mit den Messwerten und Bilddaten synchronisiert werden.

Gemäß einer bevorzugten Ausführungsform können IR-Kameras oder Wärmebildkameras eingesetzt werden, so dass Temperaturdaten mit den Bilddaten verknüpft werden. Diese Ausführungsform ermöglicht eine besonders einfach einzurichtende Aufzeichnung des Temperaturverlaufs auf beliebigen Testkörpern. Überraschend kann beispielsweise die Isolation von Fahrzeugen unter verschiedensten Bedingungen getestet werden. So kann bei einer konstanten Temperatur in der Klimakammer beispielsweise die Aufwärmung oder Abkühlung von Fahrzeugen bestimmt werden, wobei besonders heiße oder kalte Bereiche der Fahrzeugkarosse klar ersichtlich sind, ohne dass sehr viele verschiedene Sensoren auf das Fahrzeug aufgebracht werden müssen.

Weiterhin können gemäß einer bevorzugten Ausgestaltung Farbwerte abgespeichert oder ausgewertet werden. Diese Farbwerte können insbesondere dazu dienen Betriebszustände von Aggregaten zu überwachen. So führt beispielsweise eine Vereisung von Kompressoren zu Problemen beim Betrieb einer Klimakammer. Eine Vereisung kann überraschend durch die Überwachung von Farbwerten der entsprechenden Aggregate frühzeitig erkannt werden, so dass ein Versuch frühzeitig abgebrochen oder geändert werden kann.

Die zur Erzeugung von Bilddaten eingesetzten Kameras werden vorzugsweise in der Klimakammer angeordnet, wobei diese Geräte in diesem Fall den Klimatisierungsbedingungen standhalten müssen. Hierzu können die Kameras in einem entsprechenden Gehäuse untergebracht werden.

Vorzugsweise können 100 Messwerte pro Minute bis 6 Messwerte pro Stunde der erhaltenen Bilddaten abgespeichert werden, besonders bevorzugt 1 Messwert pro Sekunde bis 30 Messwerte pro Stunde.

Die Zeitwerte der Bilddaten und der sich hiervon unterscheidenden durch Sensoren erhaltenen Messdaten werden gemäß dem vorliegenden Verfahren miteinander synchronisiert. Demgemäß erfolgt eine zeitliche Zuordnung der Bilddaten zu Messwerten, die vorzugsweise durch Temperatur- und/oder Feuchtigkeitssensoren erhalten werden können. Hierbei kann jedem der über einen Sensor ermittelten Messwerte genau eine Bilddatei zugeordnet werden. Dies ist möglich, falls die Abspeicherung der Messwerte und der Bilddaten mit identischer Häufigkeit erfolgt. Gemäß einer bevorzugten Ausführungsform können mehrere der über einen Sensor ermittelten Messwerte einer Bilddatei zugewiesen werden. Durch diese Ausführungsform kann Speicherplatz eingespart werden, wobei dies insbesondere bei der Auswertung der ermittelten Messdaten zweckmäßig sein kann. Die Synchronisierung der Zeitwerte kann bevorzugt mit einem Computersystem durchgeführt werden, wobei die Messdaten zusammen mit den Bilddaten in eine Datenbank gespeichert werden können. Derartige Systeme sind weithin bekannt und kommerziell erhältlich.

Ferner kann vorgesehen sein, dass die Bilddaten Betauungszustände und/oder Vereisungszustände von Prüfkörpern und/oder von zum Betrieb der Klimakammer eingesetzten Aggregaten und/oder Flüssigkeitsstände von zum Betrieb der Klimakammer eingesetzten Aggregaten umfassen.

Ferner kann vorgesehen sein, dass die mit Zeitwerten korrelierten Bilddaten mit Sollbilddaten verglichen werden. Sollbilddaten sind in diesem Zusammenhang Daten von Bildern, die einen bei bestimmten Temperatur- und/oder Feuchtigkeitsbedingungen in der Klimakammer erwarteten Zustand eines Objekts darstellen.

Falls sich der Zustand eines Objekts trotz der Änderungen der klimatischen Bedingungen konstant bleiben sollte, so kann ein zu Beginn der Messungen aufgenommenes und abgespeichertes Bild als Sollbilddatei dienen. So kann beispielsweise der Vereisungszustand eines Kompressors dadurch ermittelt werden, dass ein Bild des Kompressors in enteistem Zustand aufgenommen wird. Die erhaltene Sollbilddatei kann anschließend mit fortwährend aufgenommenen Bilddateien verglichen werden, um Veränderungen aufzuzeichnen, wobei gegebenenfalls ein Kontrollsignal erzeugt wird.

Weiterhin können auch Sollbilddaten von Referenzobjekten herangezogen werden, um die Klimatisierungsbedingungen in einer Klimakammer zu überwachen. Beispielsweise können Objekte in der Klimakammer aufgestellt werden, deren Farbwerte von der Temperatur und/oder Feuchtigkeit abhängig sind. In einer Datenbank können die entsprechenden Farbwerte als Sollbilddaten hinterlegt und mit den aufgenommenen Bilddaten verglichen werden. Durch diesen Vergleich können die Klimatisierungsbedingungen in der Klimakammer überprüft und dokumentiert werden.

Hierbei kann jede Art einer Änderung, die durch einen Vergleich von aufgezeichneten Bilddaten mit Sollbilddaten ermittelt werden kann, zur Kontrolle der Klimatisierungsbedingungen und/oder zur Feststellung von kritischen Betriebsbedingungen dienen. Der Vergleich der mit Zeitwerten korrelierten Bilddaten mit Sollbilddaten kann beispielsweise eine Farberkennung, Mustererkennung, Bewegungserkennung und/oder Positionserkennung beinhalten.

Vorzugsweise kann vorgesehen sein, dass der Vergleich der mit Zeitwerten korrelierten Bilddaten mit Sollbilddaten automatisiert erfolgt. Diese Automatisierung kann beispielsweise über Computersysteme erfolgen, wobei die Bilddaten kontinuierlich mit den Sollbilddaten verglichen werden.

In Abhängigkeit der Auswertung oder der Anwendung können zum Vergleich übliche Algorithmen eingesetzt werden, so dass beispielsweise bei Überschreiten eines vorgegebenen Wertes ein Warn- oder Kontrollsignal erzeugt und verarbeitet wird. Ferner können Ähnlichkeitsbestimmungen durchgeführt werden, wobei in die Ähnlichkeit in Prozentwerten oder Punktwerte angegeben wird.

Die Sollbilddaten können beispielsweise Betauungszustände von Prüfkörpern, Vereisungszustände von zum Betrieb der Klimakammer eingesetzten Aggregaten und/oder Flüssigkeitsstände von zum Betrieb der Klimakammer eingesetzten Aggregaten umfassen. Weiterhin kann die Dimension von Prüfkörpern und/oder Referenzkörpern bestimmt und aufgezeichnet werden.

Ferner kann vorgesehen sein, dass das Verfahren eine computergestützte Auswertung umfasst, wobei bei einer vorgegebenen Abweichung der mit Zeitwerten korrelierten Bilddaten von den Sollbilddaten ein Warn- oder Kontrollsignal erzeugt wird. Das Warn- oder Kontrollsignal kann gemäß zuvor dargelegten Ausführungen verarbeitet werden.

Bevorzugt können an mindestens zwei Orten der Klimakammer mit Zeitwerten korrelierte Bilddaten erfasst werden. Hierbei kann eine Kamera eingesetzt werden, wobei aus dem erhaltenen Bild Bildausschnitte generiert werden, um Bilder der entsprechenden Orte aufzuzeichnen. Durch diese Ausgestaltung kann eine großflächige Überwachung der Klimakammer erzielt werden, ohne dass an diesen Orten jeweils Sensoren angebracht werden müssten. Weiterhin kann die Anzahl der Fehlerquellen minimiert werden. Ferner können durch den einfachen Aufbau Kosten und Zeit erspart werden, so dass Messreihen sehr einfach und schnell durchgeführt werden können.

Ferner kann vorgesehen sein, dass das Verfahren eine computergestützte Auswertung umfasst, wobei die mit Zeitwerten korrelierten Bilddaten und die mit Zeitwerten korrelierte Messwerte graphisch aufbereitet werden, so dass ein mit einem Zeitwert korrelierter Messwert genau einem Bild zugeordnet ist.

Durch eine bevorzugte graphische Aufbereitung können die gespeicherten Bilddaten und Messwerte auf einem oder mehreren Displays angezeigt werden. Besonders bevorzugt kann der zeitliche Verlauf der mit Zeitwerten korrelierten Messwerte graphisch dargestellt werden. Bei einer Ausführungsform können beispielsweise die Zeitwerte auf der Abszisse und die mit dem jeweiligen Zeitwert korrelierten Messwerte, beispielsweise Temperatur- und/oder Feuchtigkeitswerte auf der Ordinate aufgetragen werden, so dass eine Messwertkurve erhalten wird, die auf einem Display dargestellt wird. Die Bilddaten sind hierbei zunächst nicht auf dem Display sichtbar. Bei einer Auswahl eines entsprechenden Zeit- und/oder Messwerts über eine Eingabevorrichtung, beispielsweise durch Anklicken eines Zeitwertes mit einer Maus, wird ein Bild im gleichen oder einem weiteren Display des Zustandes angezeigt, der mit diesem Zeitwert verknüpft ist. Gemäß einer bevorzugten Ausführungsform können Bilder von verschiedenen Orten einem Zeitwert zugeordnet sein. In diesem Fall können all die aufgenommenen Bilder angezeigt und gegebenenfalls vergrößert werden, oder es können ein oder mehrere Orte, an denen die Bilder aufgenommen wurden, zuvor ausgewählt werden. Durch diese Ausgestaltung kann besonders einfach überprüft werden, ob die Klimatisierungsbedingungen an unterschiedlichen Orten den Erwartungen entsprachen, falls die Bilder von Referenzkörper aufgenommen wurden, oder ob technische Probleme während der Prüfung auftraten. Technische Probleme können sich unter anderem durch eine unerwartete Betauung von Prüfkörpern und/oder durch unzulässige Betriebszustände von Aggregaten sichtbar werden, wie zum Beispiel eine Vereisung von Kompressoren oder zu niedrige oder zu hohe Ölstände in Motoren, die zum Betreiben von Kompressoren eingesetzt werden.

In einer weiteren Ausgestaltung werden die Bilddaten kontinuierlich dargestellt, wobei diese Daten in Echtzeit oder in Zeitrafferdarstellung wiedergegeben werden können. In dieser Darstellungsweise kann eine Markierung mit einstellbarer Geschwindigkeit über die grafische Anzeige der Messdaten erfolgen, wobei gleichzeitig und synchron mit der Markierung die Bilddaten angezeigt werden. Hierbei kann das Bild optisch getrennt von der Messwertdarstellung angezeigt werden, beispielsweise in einem Bildfenster oder einem zweiten Display. Diese Darstellung kann vorzugsweise in Zeitraffer erfolgen. So kann schnell und unkompliziert ein Eindruck von dem vorliegenden Prozess gewonnen werden und nicht erwünschte Zustände können erkannt werden. Weiterhin können die zuvor beschriebenen, abgespeicherten Kontroll- oder Warnsignale bei der Auswertung als Markierungspunkte dienen.

Weiterhin kann vorgesehen sein, dass bei einer geeigneten Eingabe an einer Eingabeeinrichtung die Messwerte und die Bilddaten mit den gleichen Zeitwerten auf zumindest einem Display dargestellt werden oder mehrere der dargestellten Messwerte über eine Eingabeeinrichtung ausgewählt werden können und bei einer Auswahl eines Messwerts die mit dem Messwert zeitlich korrelierten Bilddaten auf dem Display oder einem zweiten Display dargestellt werden.

Ferner kann vorgesehen sein, dass die Bilddaten kontinuierlich ausgewertet werden, wobei bei signifikanten Änderungen, die zugehörigen Messwerte ausgelesen und angezeigt werden. Falls mehrere Messwerte einer Bilddatei zugeordnet sind, wird der entsprechende Wertbereich dargelegt. Hierbei kann diese Auswertung vorzugsweise in Zeitraffer erfolgen. Durch die Zeitraffertechnik ist es möglich langsame Veränderungen sichtbar zu machen.

Weiterhin kann die vorliegende Erfindung mit einem Verfahren zur Bestimmung der Auswirkungen von klimatischen Bedingungen auf einen Testkörper in einer Klimakammer kombiniert werden, welches dadurch gekennzeichnet ist, dass mit wenigstens einem Sensor in der Klimakammer aufgenommene Messwerte mit Zeitwerten korreliert werden und mit Zeitwerten korrelierte Bilddaten des Testkörpers erfasst werden, wobei die mit Zeitwerte der Messwerte und der Bilddaten miteinander synchronisiert werden und in einem Speicher abrufbar hinterlegt werden, anschließend die Messwerte auf einem Display dargestellt werden, wobei mehrere der dargestellten Messwerte über eine Eingabeeinrichtung ausgewählt werden können und bei einer Auswahl eines Messwerts die mit dem Messwert zeitlich korrelierten Bilddaten des Testkörpers auf dem Display oder einem zweiten Display dargestellt werden.

Bei diesem Verfahren werden die Messwerte auf einem Display dargestellt, wobei mehrere der dargestellten Messwerte über eine Eingabeeinrichtung ausgewählt werden können und bei einer Auswahl eines Messwerts die mit dem Messwert zeitlich korrelierten Bilddaten des Testkörpers auf dem Display oder einem zweiten Display dargestellt werden.

Unter Display ist hierbei eine Einrichtung zu verstehen, durch die Daten visuell erfasst werden können. Beispielsweise kann ein LCD-Monitor oder ein OLED-Monitor eingesetzt werden. Eine Eingabeeinrichtung ermöglicht eine Kommunikation mit einem Computersystem, so dass beispielsweise Werte ausgewählt werden können. Zu den Eingabeeinrichtungen zählen Tastaturen, Mäuse oder berührungsempfindliche Bildschirme.

Ein Testkörper ist im Rahmen der vorliegenden Erfindung ein Körper, dessen Eigenschaften durch die Klimatisierung geprüft wird. Hierbei können diese Eigenschaften bekannt sein, so dass bevorzugt Referenzwerte in der Auswerteeinheit abgespeichert und abrufbar sind. In diesem Fall kann der Testkörper ein Referenzkörper sein, der insbesondere dazu dienen kann, die Klimatisierungsbedingungen in der Klimakammer zu überprüfen. Weiterhin kann der Testkörper ein Objekt sein, dessen Eigenschaften nicht explizit bekannt sind. In diesem Fall stellt der Testkörper einen Gegenstand dar, dessen Eigenschaften zumindest teilweise durch mindestens einen Klimatisierungsversuch bestimmt werden sollen. In Rahmen der Erfindung wird der Testkörper in diesem Fall als Prüfkörper bezeichnet.

Weitere bevorzugte Ausgestaltungen des Verfahrens zur Bestimmung der Auswirkungen von klimatischen Bedingungen auf einen Testkörper in einer Klimakammer wurden zuvor im Hinblick auf das Verfahren zur Überprüfung von Klimatisierungsbedingungen in einer Klimakammer dargelegt, so dass hierauf Bezug genommen wird.

Ein weiterer Gegenstand der vorliegenden Erfindung ist eine Vorrichtung zum Durchführen eines Verfahrens nach einem der vorangehenden Ansprüche, umfassend einen abschließbaren oder abgeschlossenen Raum, mindestens ein Aggregat zur Temperierung des abschließbaren oder abgeschlossenen Raumes, mindestens ein Aggregat zur Einstellung der Feuchtigkeit des abschließbaren oder abgeschlossenen Raumes, mindestens eine Kamera zur Erfassung von Bilddaten sowie eine mit der Kamera verbundene Auswerteeinheit, in der Sollbilddaten speicherbar sind, wobei die Auswerteeinheit dazu eingerichtet ist, in der Klimakammer aufgenommene Sensor-Messwerte mit Zeitwerten zu korrelieren, mit Zeitwerten korrelierte Bilddaten zu erfassen, die Zeitwerte der Messwerte und der Bilddaten miteinander zu synchronisieren, die mit Zeitwerten korrelierten Bilddaten mit Sollbilddaten zu vergleichen und die Klimatisierungsbedingungen in der Klimakammer zu überprüfen und zu dokumentieren, wobei die Kamera zur Erfassung von Bilddaten eine IR-Kamera und/oder Wärmebildkamera ist, welche dadurch gekennzeichnet ist, dass die IR-Kamera in einem isolierenden Gehäuse mit transparenter, temperaturstabiler Front eingebaut ist.

Aggregate zur Temperierung des abschließbaren oder abgeschlossenen Raumes sind in der Fachwelt weithin bekannt. Diese umfassen Heizungen, wie Gasheizungen, Widerstandsheizer oder IR-Strahler, wobei diese Heizungen außerhalb der Klimakammern angeordnet sein können und lediglich entsprechend erwärmte Luft in die Kammer eingeblasen wird. Weiterhin umfassen diese Aggregate vielfach Kühlungen, wobei die Klimakammern Kühlanlagen enthalten können, oder entsprechend temperierte Luft in die Kammer eingeleitet werden kann. Vorzugsweise umfassen Aggregate zur Temperierung sowohl Heiz- als auch Kühlvorrichtungen, wobei diese Vorrichtungen mit einer Steuerung verbunden sind, die in Wirkverbindung mit einem oder mehreren Temperatursensoren stehen, so dass eine Regelung der Temperatur innerhalb des abschließbaren oder abgeschlossenen Raumes möglich ist.

Ferner umfasst die Anlage vorzugweise mindestens ein Aggregat zur Einstellung der Feuchtigkeit des abschließbaren oder abgeschlossenen Raumes. Anlagen zur Verdampfung oder Entfeuchtung von Räumen sind weithin bekannt, so dass in diesem Zusammenhang auf den Stand der Technik verwiesen werden kann. Schließlich kann erfindungsgemäß auch vorgesehen sein, dass die Vorrichtung eine Klimaprüfanlage ist, die eine Steuerung umfasst, wobei die Steuerung in Wirkverbindung steht mit den Aggregaten zur Temperierung und zur Einstellung der Feuchtigkeit des abschließbaren oder abgeschlossenen Raumes, und die Klimaprüfanlage zumindest einen Feuchtesensor und einen Temperatursensor in dem Raum umfasst, die mit der Steuerung verbunden sind, so dass die Temperatur und die Feuchte in dem Raum durch die Steuerung steuerbar ist. Ferner umfasst die Vorrichtung mindestens eine Kamera zur Erfassung von Bilddaten. Geeignete Kameras sind kommerziell erhältlich. Diese Kamera kann in einem Gehäuse untergebracht sein, um die Kamera von den Klimatisierungsbedingungen zu schützen. Ferner kann vorgesehen sein, dass die für die optische Abbildung notwendigen lichtdurchlässigen Bauteile des Gehäuses und/oder der Kamera vor Niederschlag, beispielsweise Taubildung oder einer Vereisung durch entsprechende Erwärmung des Gehäuses und/oder der Kamera geschützt sind. Ferner kann zu diesem Zweck auch ein Gasstrom über einen Teil der lichtdurchlässigen Bauteile geleitet werden, der eine Abscheidung von Wasser auf der Optik verhindert.

Gemäß einer bevorzugten Ausführungsform ist die Kamera in einem isolierenden Gehäuse mit transparenter, temperaturstabiler Front, beispielsweise aus mineralischem Glas, eingebaut Von dem Gehäuse kann vorzugsweise ein temperaturbeständiger Schlauch nach außen gehen, durch den das Kabel der Kamera führt. Des Weiteren kann durch diesen Schlauch ein dünner Schlauch geführt werden, durch den Luft mit Umgebungstemperatur in das Kameragehäuse geblasen werden kann. Hierbei kann das Gehäuse zusätzlich isoliert sein, so dass das Gehäuse eine Außentemperatur im Messbereich der Klimakammer aufweist, wohingegen die Innentemperatur im Bereich liegt, in der die Kamera zuverlässig arbeitet. Die Luftmenge wird vorzugsweise so geregelt, dass die Kamera immer im zulässigen Umgebungstemperaturbereich bleibt. Zur Kontrolle und Regelung kann zusätzlich ein Sensor durch den Silikonschlauch in das Kameragehäuse geführt werden.

Ferner umfasst eine bevorzugte Vorrichtung eine mit der Kamera verbundene Auswerteeinheit, in der Sollbilddaten speicherbar sind. Die Auswerteeinheit wird vorzugsweise durch ein Computersystem realisiert, welches eine Abspeicherung und graphische Aufbereitung der gemessenen Daten ermöglicht. Die Speicherung der Sollbilddaten kann in den zuvor dargelegten Speichern erfolgen.

Weitere bevorzugte Ausgestaltungen einer erfindungsgemäßen Vorrichtung wurden zuvor im Hinblick auf das Verfahren zur Überprüfung von Klimatisierungsbedingungen in einer Klimakammer dargelegt, so dass hierauf Bezug genommen wird.

Im Folgenden wird ein Ausführungsbeispiel der Erfindung anhand von schematisch dargestellten Figuren erläutert, ohne jedoch dabei die Erfindung zu beschränken.

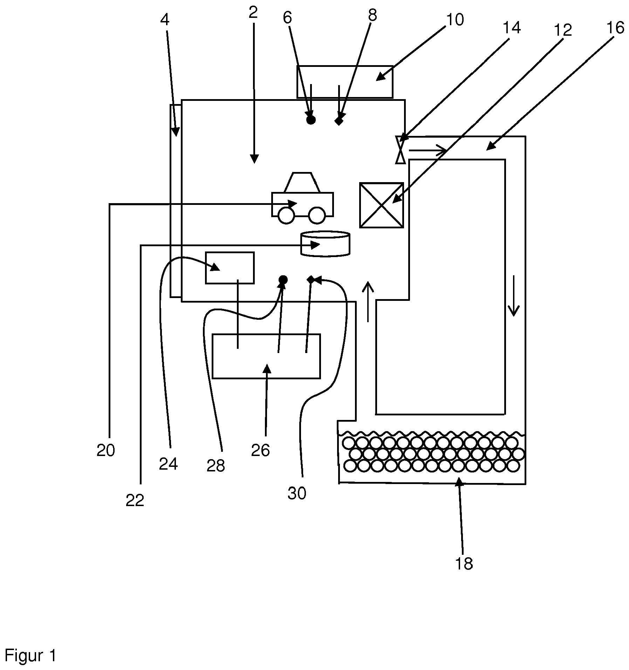

Figur 1 zeigt eine schematische Querschnittansicht einer Klimaprüfanlage zur Umsetzung eines erfindungsgemäßen Verfahrens. Die Klimaprüfanlage umfasst einen Raum 2 als Prüfraum zum Testen der klimatischen Einflüsse auf Gegenstände, die in den Raum 2 eingebracht werden. Der Raum 2 ist mit einer Tür 4 abschließbar, so dass im Inneren des Raums 2 andere klimatische Verhältnisse als in der Umgebung der Klimaprüfanlage herrschen.

Im Inneren des Raums sind ein Temperatursensor 6 und ein Feuchtesensor 8 angeordnet, die mit einer Steuerung 10 der Klimaprüfanlage verbunden sind. Mit dem Temperatursensor 6 und dem Feuchtesensor 8 werden die aktuellen klimatischen Bedingungen im Inneren des Raums 2 bestimmt. Die Steuerung 10 kann auf die Daten der beiden Sensoren 6, 8 zurückgreifen, um die klimatischen Bedingungen in dem Raum 2 zu regeln.

Zum Temperieren des Raums 2 ist in dem Raum 2 ein Aggregat zur Temperierung 12, beispielsweise eine Heizung angeordnet. Als Heizung kann eine einfache Widerstandsheizung verwendet werden. Zudem kann ein Radiallüfter im Zentrum von Heizwendeln der Heizung angeordnet sein, um die Luft im Inneren des Raums 2 durch eine Umwälzung nach Art eines Umluftgeräts zu erhitzen. Entsprechend können auch Kühlanlagen als Aggregat zur Temperierung 12 eingesetzt werden, wobei in einer bevorzugten Ausführungsform ein Aggregat zur Temperierung 12 sowohl eine Kühlanlage als auch eine Heizung umfasst.

Ein Gebläse 14 ist an einer Öffnung des Raums 2 angeordnet, mit dem ein Luftstrom aus dem Raum 2 in eine, hinter der Öffnung angeordnete Leitung 16 erzeugt werden kann. Der durch das Gebläse 14 erzeugte Luftstrom in die Leitung 16 ist durch einen Pfeil in Figur 1 gekennzeichnet. Der Luftstrom wird durch die Leitung 16 bis in ein Aggregat zur Einstellung der Feuchtigkeit 18 geleitet, das im Allgemeinen ein Wasserreservoir umfasst, wobei der Luftstrom über die Oberfläche des Wasserreservoirs in dem Aggregat zur Einstellung der Feuchtigkeit 18 strömt. Schließlich gelangt der durch das Gebläse 14 erzeugte Luftstrom durch eine weitere Leitung wieder in das Innere des Raums 2, wie durch die Pfeile in den Leitungen 16 in Figur 1 angedeutet.

Zur Veranschaulichung sind in dem Raum 2 ein Prüfkörper 20 und ein Referenzkörper 22 eingebracht, wobei die Eigenschaften des Referenzkörpers 22 vor der Versuchsdurchführung im Wesentlichen bekannt sind und die Eigenschaften des Prüfkörper 20 untersucht werden sollen.

Ferner ist in dem Raum 2 eine Kamera 24 untergebracht, die Bilder von dem Prüfkörper 20 und dem Referenzkörper 22 aufnehmen kann, wobei die Bilder in eine Auswerteeinheit 26 übertragen und dort abgespeichert werden.

Weiterhin finden sich in Raum 2 mindestens ein zweiter Temperatursensor 28 und ein zweiter Feuchtesensor 30. Diese Sensoren 28 und 30 können in räumlicher Nähe zu den entsprechenden Sensoren 6, 8 befinden. Zweck dieser redundanten Sensoren ist eine Überprüfung der zur Steuerung der Klimakammer eingesetzten Sensoren 6, 8, so dass eine Überprüfung von Klimatisierungsbedingungen erfolgen kann, wobei dies insbesondere bei einer Einrichtung der Klimakammer zweckmäßig sein kann, um Mängel der Sensoren 6, 8 frühzeitig zu erkennen.

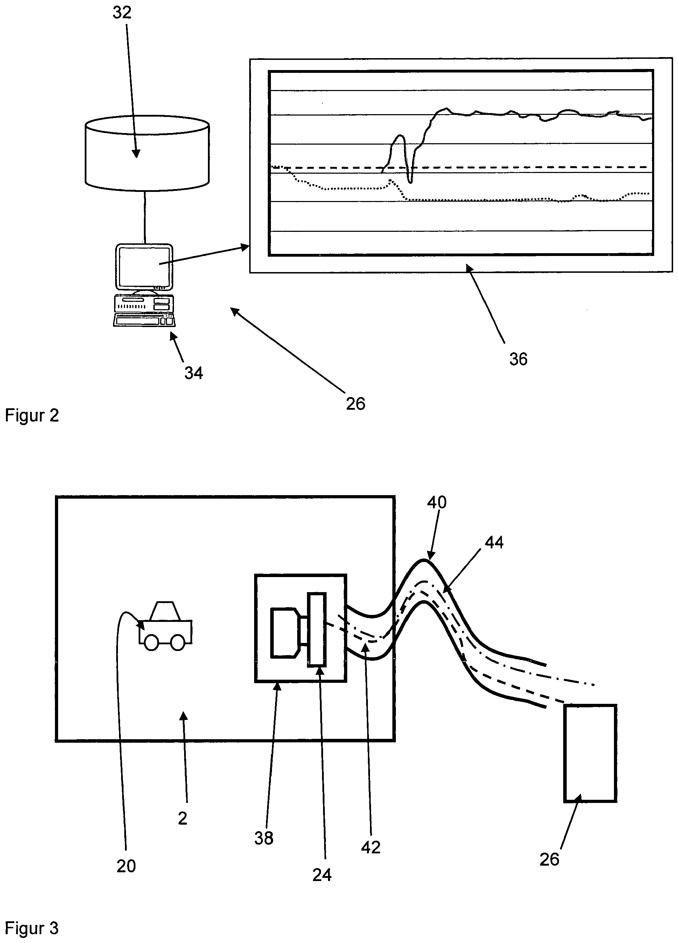

Figur 2 zeigt eine Ausführungsform einer Auswerteeinheit 26, wobei die durch die Sensoren ermittelten Messwerte und die Bilddaten in einer Datenbank 32 abgespeichert werden können. Weiterhin umfasst die Auswerteeinheit 26 mindestens einen Computerarbeitsplatz 34, der eine Eingabeeinrichtung und mindestens ein Display aufweist. Die Graphik 36 stellt ein Beispiel eines Diagramms dar, welches den Ablauf eines Klimaversuchs abbildet, wobei die Zeitwerte auf der Abszisse und die mit dem jeweiligen Zeitwert korrelierten Messwerte, beispielsweise Temperatur- und/oder Feuchtigkeitswerte auf der Ordinate aufgetragen sind. Die Graphik 36 kann auf dem Display des Computerarbeitsplatz 34 dargestellt werden, wie dies durch den Pfeil angedeutet ist.

Die Bilddaten sind hierbei zunächst nicht sichtbar. Bei einer Auswahl eines entsprechenden Zeit- und/oder Messwerts über eine Eingabevorrichtung, beispielsweise durch Anklicken eines Zeitwertes mit einer Maus, wird ein Bild im gleichen oder einem weiteren Display des Zustandes angezeigt, der mit diesem Zeitwert verknüpft ist.

Figur 3 beschreibt einen Aufbau eines Schutzes für eine Kamera 24 gegen extreme Klimabedingungen. Die in Raum 2 eingebrachte Kamera 24 ist auf einen Prüfkörper 20 ausgerichtet und kann Bilder desselben aufnehmen. Zum Schutz der Kamera 24 ist diese in dieser Ausführungsform in einem Gehäuse 38 untergebrachten.

Von dem Gehäuse 38 führt ein temperaturbeständiger Schlauch 40 nach außen, durch den das Datenkabel der Kamera 42 führt, welches mit der Auswerteeinheit 26 verbunden ist. Des Weiteren wird durch diesen Schlauch 40 eine dünne Gasleitung 44 geführt, durch die Luft mit Umgebungstemperatur in das Gehäuse 38 geblasen werden kann.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 2: Raum
- 4: Tür
- 6, 28: Temperatursensor
- 8, 30: Feuchtesensor
- 10: Steuerung
- 12: Aggregat zur Temperierung
- 14: Gebläse
- 16: Leitung
- 18: Aggregat zur Einstellung der Feuchtigkeit
- 20: Prüfkörper
- 22: Referenzkörper
- 24: Kamera
- 26: Auswerteeinheit
- 32: Datenbank
- 34: Computerarbeitsplatz
- 36: Graphik
- 38: Gehäuse
- 40: Schlauch
- 42: Datenkabel
- 44: Gasleitung

## Patentansprüche

1. Verfahren zur Dokumentation und Überprüfung von Klimatisierungsbedingungen in einer Klimakammer, **dadurch gekennzeichnet, dass**
mit wenigstens einem Sensor in der Klimakammer aufgenommene Messwerte mit Zeitwerten korreliert werden und mit Zeitwerten korrelierte Bilddaten erfasst werden, wobei die Zeitwerte der Messwerte und der Bilddaten miteinander synchronisiert werden und in einem Speicher abrufbar hinterlegt werden und die mit Zeitwerten korrelierten Bilddaten mit Sollbilddaten verglichen werden und dadurch die Klimatisierungsbedingungen in der Klimakammer überprüft und dokumentiert werden.

2. Verfahren gemäß Anspruch 1, **dadurch gekennzeichnet, dass**
die Bilddaten Betauungszustände und/oder Vereisungszustände von Prüfkörpern und/oder von zum Betrieb der Klimakammer eingesetzten Aggregaten und/oder Flüssigkeitsstände von zum Betrieb der Klimakammer eingesetzten Aggregaten umfassen.

3. Verfahren gemäß Anspruch 1 oder 2, **dadurch gekennzeichnet, dass** der Vergleich der mit Zeitwerten korrelierten Bilddaten mit Sollbilddaten automatisiert erfolgt.

4. Verfahren gemäß einem der vorangehenden Ansprüche, **dadurch gekennzeichnet, dass**
der Vergleich der mit Zeitwerten korrelierten Bilddaten mit Sollbilddaten eine Farberkennung, Mustererkennung, Bewegungserkennung und/oder Positionserkennung umfasst.

5. Verfahren gemäß einem der vorangehenden Ansprüche, **dadurch gekennzeichnet, dass**
das Verfahren eine computergestützte Auswertung umfasst, wobei bei einer vorgegebenen Abweichung der mit Zeitwerten korrelierten Bilddaten von den Sollbilddaten ein Warn- oder Kontrollsignal erzeugt wird.

6. Verfahren nach einem der vorangehenden Ansprüche, **dadurch gekennzeichnet, dass**
die mit mindestens einem Sensor in der Klimakammer aufgenommenen Messwerte Temperaturdaten und/oder Feuchtigkeitsdaten umfassen.

7. Verfahren nach einem der vorangehenden Ansprüche, **dadurch gekennzeichnet, dass**
zur Überprüfung von Klimatisierungsbedingungen vorgegebene Feuchtigkeitswerte und/oder Temperaturwerte eingestellt werden.

8. Verfahren gemäß Anspruch 7, **dadurch gekennzeichnet, dass**
die mit wenigstens einem Sensor in der Klimakammer aufgenommenen Messwerte mit Sollwerten verglichen werden, die sich aus den vorgegebenen Feuchtigkeitswerten und/oder Temperaturwerten ergeben.

9. Verfahren nach einem der vorangehenden Ansprüche, **dadurch gekennzeichnet, dass**
an mindestens zwei Orten der Klimakammer mit Zeitwerten korrelierte Bilddaten erfasst werden.

10. Verfahren nach einem der vorangehenden Ansprüche, **dadurch gekennzeichnet, dass**
die mit Zeitwerten korrelierten Bilddaten Farbwerte, Kontrastwerte und/oder Temperaturwerte enthalten.

11. Verfahren nach einem der vorangehenden Ansprüche, **dadurch gekennzeichnet, dass**
bei einer geeigneten Eingabe an einer Eingabeeinrichtung die Messwerte und die Bilddaten mit den gleichen Zeitwerten auf zumindest einem Display dargestellt werden oder
mehrere der dargestellten Messwerte über eine Eingabeeinrichtung ausgewählt werden können und bei einer Auswahl eines Messwerts die mit dem Messwert zeitlich korrelierten Bilddaten auf dem Display oder einem zweiten Display dargestellt werden.

12. Vorrichtung zum Durchführen eines Verfahrens nach einem der vorangehenden Ansprüche, umfassend einen abschließbaren oder abgeschlossenen Raum (2), mindestens ein Aggregat zur Temperierung (12) des abschließbaren oder abgeschlossenen Raumes, mindestens ein Aggregat zur Einstellung der Feuchtigkeit (18) des abschließbaren oder abgeschlossenen Raumes, mindestens eine Kamera (24) zur Erfassung von Bilddaten sowie eine mit der Kamera (24) verbundene Auswerteeinheit (26), in der Sollbilddaten speicherbar sind, wobei die Auswerteeinheit (26) dazu eingerichtet ist, in der Klimakammer aufgenommene Sensor-Messwerte mit Zeitwerten zu korrelieren, mit Zeitwerten korrelierte Bilddaten zu erfassen, die Zeitwerte der Messwerte und der Bilddaten miteinander zu synchronisieren, die mit Zeitwerten korrelierten Bilddaten mit Sollbilddaten zu vergleichen und die Klimatisierungsbedingungen in der Klimakammer zu überprüfen und zu dokumentieren, wobei die Kamera (24) zur Erfassung von Bilddaten eine IR-Kamera ist, **dadurch gekennzeichnet, dass** die IR-Kamera in einem isolierenden Gehäuse mit transparenter, temperaturstabiler Front eingebaut ist.

## Claims

1. A method for documenting and testing climatic conditions in an environmental chamber, **characterised in that**
measured values recorded using at least one sensor in the environmental chamber are correlated with time values and image data correlated with time values are captured, wherein the time values of the measured values and of the image data are synchronised with one another and are stored in a memory in a retrievable manner, and the image data correlated with time values are compared with target image data, and **in that**
the climatic conditions in the environmental chamber are tested and documented.

2. The method according to claim 1, **characterised in that**
the image data comprise condensation states and/or icing states of test bodies and/or of assemblies used for operation of the environmental chamber and/or liquid states of assemblies used for operation of the environmental chamber.

3. The method according to claim 1 or 2, **characterised in that**
the image data correlated with time values are compared with target image data in an automated manner.

4. The method according to any one of the preceding claims, **characterised in that**
the comparison of the image data correlated with time values with target image data comprises a colour recognition, pattern recognition, movement recognition and/or position recognition.

5. The method according to any one of the preceding claims, **characterised in that**
the method comprises a computer-assisted evaluation, wherein a warning or control signal is generated in the event of a specified deviation of the image data correlated with time values from the target image data.

6. The method according to any one of the preceding claims, **characterised in that**
the measured values recorded using at least one sensor in the environmental chamber comprise temperature data and/or moisture data.

7. The method according to any one of the preceding claims, **characterised in that**
specified moisture values and/or temperature values are set for the testing of climatic conditions.

8. The method according to claim 7, **characterised in that**
the measured values recorded using at least one sensor in the environmental chamber are compared with target values, which are given from the specified moisture values and/or temperature values.

9. The method according to any one of the preceding claims, **characterised in that**
image data correlated with time values are captured at least at two locations of the environmental chamber.

10. The method according to any one of the preceding claims, **characterised in that**
the image data correlated with time values contain colour values, contrast values and/or temperature values.

11. The method according to any one of the preceding claims, **characterised in that**
the measured values and the image data having the same time values are displayed on at least one display in the event of a suitable input at an input means, or
a plurality of the displayed measured values can be selected via an input means and, in the event of a selection of a measured value, the image data correlated temporally with the measured value are displayed on the display or a second display.

12. A device for carrying out a method according to any one of the preceding claims, comprising a closable or closed space (2), at least one assembly for controlling the temperature (12) of the closable or closed space, at least one assembly for setting the moisture (18) of the closable or closed space, at least one camera (24) for capturing image data, and an evaluation unit (26) connected to the camera (24), in which evaluation unit the target image data can be stored, wherein the evaluation unit (26) is designed to correlate sensor measured values recorded in the environmental chamber with time values, to capture image data correlated with time values, to synchronise the time values of the measured values and of the image data with one another, to compare the image data correlated with time values with target image data, and to test and document the climatic conditions in the environmental chamber, wherein the camera (24) for capturing image data is an IR camera, **characterised in that** the IR camera is installed in an insulating housing with transparent, temperature-stable front.

## Revendications

1. Procédé pour la documentation et la vérification de conditions climatiques dans une enceinte climatique, **caractérisé en ce que**
des valeurs de mesure enregistrées avec au moins un capteur dans l'enceinte climatique sont corrélées avec des valeurs de temps et sont détectées avec des données d'image corrélées avec des valeurs de temps, où les valeurs de temps des valeurs de mesure et les données d'image sont synchronisées ensemble et sont stockées dans une mémoire en étant disponibles, et les données d'image corrélées avec des valeurs de temps sont comparées avec des données d'images de référence, et qu'ainsi les conditions climatiques dans l'enceinte climatique peuvent être vérifiées et documentées.

2. Procédé selon la revendication 1, **caractérisé en ce que**
les données d'images comprennent des états de condensation et/ou des états de givrage d'échantillons, et/ou des organes mis en oeuvre pour le fonctionnement de l'enceinte climatique, et/ou des niveaux de liquides des organes mis en oeuvre pour le fonctionnement de l'enceinte climatique.

3. Procédé selon la revendication 1 ou 2, **caractérisé en ce que**
la comparaison des données d'images corrélées avec des valeurs de temps est effectuée de manière automatisée avec des données d'images de référence.

4. Procédé selon l'une des revendications précédentes, **caractérisé en ce que** la comparaison des données d'images corrélées avec des valeurs de temps comprend une reconnaissance de couleurs, une reconnaissance de motifs, une reconnaissance de déplacements et/ou une reconnaissance de position avec des données d'images de référence.

5. Procédé selon l'une des revendications précédentes, **caractérisé en ce que** le procédé comprend une analyse mise en oeuvre par ordinateur, où, pour une déviation prédéterminée des données d'images corrélées avec des valeurs de temps par rapport aux données de référence, un signal d'avertissement ou de contrôle est généré.

6. Procédé selon l'une des revendications précédentes, **caractérisé en ce que** les valeurs de mesures enregistrées avec au moins un capteur dans l'enceinte climatique comprennent des données de température et/ou des données d'humidité.

7. Procédé selon l'une des revendications précédentes, **caractérisé en ce que**, pour la vérification de conditions climatiques, des valeurs d'humidité et/ou des valeurs de température prédéterminées sont réglées.

8. Procédé selon la revendication 7, **caractérisé en ce que** les valeurs de mesures enregistrées avec au moins un capteur dans l'enceinte climatique sont comparées avec des valeurs de référence qui résultent des valeurs d'humidité et/ou des valeurs de température prédéterminées.

9. Procédé selon l'une des revendications précédentes, **caractérisé en ce qu'**à au moins deux endroits de l'enceinte climatique, des valeurs d'image corrélées avec des valeurs de temps sont détectées.

10. Procédé selon l'une des revendications précédentes, **caractérisé en ce que** les données d'images corrélées avec des valeurs de temps contiennent des valeurs de couleur, des valeurs de contraste et/ou des valeurs de température.

11. Procédé selon l'une des revendications précédentes, **caractérisé en ce que** lors d'une entrée appropriée sur un dispositif d'entrée, les valeurs de mesures et les valeurs d'images sont représentées avec les mêmes valeurs de temps sur au moins un affichage ou
plusieurs parmi les valeurs de mesures représentées peuvent être choisies par un dispositif d'entrée et, lors du choix d'une valeur de mesure, les données d'image corrélées temporellement avec la valeur de mesure sont représentées sur l'affichage ou sur un deuxième affichage.

12. Dispositif pour l'exécution d'un procédé selon l'une des revendications précédentes, comprenant une enceinte (2) pouvant être fermée ou fermée, au moins un organe pour la climatisation (12) de l'enceinte pouvant être fermée ou fermée, au moins un organe pour le réglage de l'humidité (18) de l'enceinte pouvant être fermée ou fermée, au moins une caméra (24) pour la détection de données d'image ainsi qu'une unité d'exploitation (26), reliée avec la caméra (24), dans laquelle des données d'image de référence peuvent être stockées, où l'unité d'exploitation (26) est conçue pour corréler les valeurs de mesure de capteur enregistrées dans l'enceinte climatique avec des valeurs de temps, pour détecter des données d'image corrélées avec des valeurs de temps, pour synchroniser ensemble les valeurs de temps des valeurs de mesure et les données d'image, pour comparer les données d'image corrélées avec des valeurs de temps avec des données d'image de référence et pour vérifier et documenter les conditions climatiques dans l'enceinte climatique, où la caméra (24) pour la détection de données d'image est une caméra infrarouge, **caractérisé en ce que** la caméra infrarouge est incorporée dans un boîtier isolant avec une partie frontale transparente, stable en température.
